# EUROPÄISCHE PATENTANMELDUNG

(11) **EP 4 628 863 A1**
(43) Veröffentlichungstag der Anmeldung: **08.10.2025**
(21) Anmeldenummer: 25166441.3
(22) Anmeldetag: 26.03.2025
(51) Int. Cl.: G01K 17/08

(54) **ERFASSUNGSGERÄT MIT WEITEREM TEMPERATURFÜHLER**

(30) Priorität: 26.03.2024 DE 102024108603
(71) Anmelder: Engelmann Sensor GmbH, 69168 Wiesloch-Baiertal (DE)
(72) Erfinder: Avergon, Illya, 69126 Heidelberg (DE); Sulzberger, Markus, 70825 Korntal (DE); Fink, Michael, 90763 Fürth (DE)
(74) Vertreter: Durm Patentanwälte PartG mbB

(57) **Zusammenfassung**

Die vorliegende Erfindung betrifft ein Erfassungsgerät (14) zum Erfassen von Temperaturwerten an einer Wärmeleitplatte (12) an einem Heizkörper (11), mit: einem Basisteil (26) zum Ankoppeln an die Wärmeleitplatte; einem Temperaturfühler (28) zum Messen einer Temperatur der Wärmeleitplatte; und einem weiteren Temperaturfühler (56) zum Messen einer Raumtemperatur, wobei eine elektrische Verbindung (58) zum Auslesen des weiteren Temperaturfühlers gleichzeitig zum mechanischen Befestigen eines weiteren Bauteils ausgebildet ist. Die vorliegende Erfindung betrifft weiterhin ein Erfassungssystem (10) zum Erfassen von Temperaturwerten an einem Heizkörper (11).

## Beschreibung

Die vorliegende Erfindung betrifft ein Erfassungsgerät zum Erfassen von Temperaturwerten an einer Wärmeleitplatte an einem Heizkörper. Die vorliegende Erfindung betrifft weiterhin ein Erfassungssystem zum Erfassen von Temperaturwerten an einem Heizkörper.

Heizkostenverteiler werden zum Erfassen des Wärmeverbrauchs in Gebäuden und zur verbrauchsabhängigen Berechnung von Heizkosten verwendet. Üblicherweise werden diese Erfassungsgeräte dazu an Heizkörpern angebracht und messen Sensorwerte, insbesondere Temperaturdaten. Heutzutage wird für die Auslesung zumeist auf Funkübertragungen zurückgegriffen, um den Aufwand möglichst gering zu halten. Erfasst werden insbesondere Temperaturdifferenzen zwischen einer Temperatur des Heizkörpers und einer Raumtemperatur bzw. damit in Verbindung stehenden Temperaturen. Um basierend auf den erfassten Sensorwerten einen Wärmemengenverbrauch zu ermitteln, können dann Umrechnungen basierend auf der Art und Abmessung des Heizkörpers oder anderen Parametern vorgenommen werden. Um Heizkosten für einzelne Verbraucher zu ermitteln, kann auf dieser Basis eine entsprechende Verteilung des Wärmemengenverbrauchs innerhalb eines Gebäudes vorgenommen werden.

**In** aktuellen Systemen erfolgt zumeist eine Ankopplung eines Erfassungsgeräts an eine Wärmeleitplatte am Heizkörper. Das Erfassungsgerät umfasst mindestens einen Temperaturfühler, der dazu ausgebildet ist, die Temperatur der Wärmeleitplatte aufzunehmen. Die Wärmeleitplatte selbst ist üblicherweise aus Metall ausgebildet und fest mit dem Heizkörper verbunden, beispielsweise mittels einer Schweiß- oder Schraubverbindung. Die Wärmeleitplatte nimmt die Wärme des Heizkörpers auf bzw. an und dient insoweit als feste Basis für den Temperaturfühler des Erfassungsgeräts.

Für die Verbindung zwischen Wärmeleitplatte und Erfassungsgerät bzw. die Anbindung eines Erfassungsgeräts an eine Wärmeleitplatte wird zumeist auf eine Art Aufschieben zurückgegriffen, wobei das Erfassungsgerät zum Befestigen von einer Seite auf die Wärmeleitplatte aufgeschoben und dann mittels eines Gegenstücks bzw. eines Abdeckstücks oder einer Plombe abgeschlossen und festgelegt wird. Die Verwendung einer Verplombung stellt dabei eine Sicherung gegen einen unerlaubten Eingriff dar. Insbesondere soll vermieden werden, dass ein Nutzer Einfluss auf die gemessene Temperatur bzw. auf die ermittelten Wärmedaten nehmen kann. Oft werden dabei Prinzipien eingesetzt, bei denen eine zerstörungsfreie Öffnung mechanisch verhindert wird.

Bei Erfassungsgeräten mit einem Temperaturfühler zum Messen der Temperatur der Wärmeleitplatte und einem weiteren Temperaturfühler zum Messen der Raumtemperatur bzw. damit in Verbindung stehenden Temperaturen ist sicherzustellen, dass beide Temperaturen zuverlässig erfasst werden. Hinsichtlich des weiteren Temperaturfühlers ist es dabei insbesondere relevant, dass dieser möglichst in den Raum hinein orientiert ist bzw. innerhalb des entsprechenden Gehäuses möglichst weit entfernt von der Wärmeleitplatte und damit von dieser entkoppelt angeordnet ist. Eine zuverlässige Erfassung der Raumtemperatur ist auch für die Zulassung relevant.

Ausgehend hiervon stellt sich der vorliegenden Erfindung die Aufgabe, ein Erfassungsgerät und Erfassungssystem bereitzustellen, das eine zuverlässige Erfassung einer Temperatur der Wärmeleitplatte und einer Raumtemperatur ermöglicht. Zudem soll eine effiziente Fertigbarkeit bei möglichst geringen Kosten ermöglicht werden.

Zum Lösen dieser Aufgabe betrifft die vorliegende Erfindung in einem ersten Aspekt ein Erfassungsgerät zum Erfassen von Temperaturwerten an einer Wärmeleitplatte an einem Heizkörper mit:
- einem Basisteil zum Ankoppeln an die Wärmeleitplatte;
- einem Temperaturfühler zum Messen einer Temperatur der Wärmeleitplatte; und
- einem weiteren Temperaturfühler zum Messen einer Raumtemperatur, wobei eine elektrische Verbindung zum Auslesen des weiteren Temperaturfühlers gleichzeitig zum mechanischen Befestigen eines weiteren Bauteils ausgebildet ist.

**In** einem weiteren Aspekt betrifft die Erfindung ein Erfassungssystem zum Erfassen von Temperaturwerten an einem Heizkörper mit:
- einem Erfassungsgerät wie zuvor beschrieben; und
- einer Wärmeleitplatte zum Anbringen an einen Heizkörper, wobei vorzugsweise eine dem Heizkörper zugewandte Seite der Wärmeleitplatte mindestens eine Vertiefung aufweist, die beim Anlegen an eine flächige Auflage einen Hohlraum zum Aufnehmen eines Fortsatzes am Basisteil ausbildet.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere können das Erfassungssystem und das Erfassungsgerät entsprechend den in den abhängigen Ansprüchen für das Erfassungssystem und das Erfassungsgerät beschriebenen Ausgestaltungen ausgeführt sein.

Erfindungsgemäß ist es vorgesehen, dass bei einem Erfassungsgerät, das zwei Temperaturfühler zum Messen einer Raumtemperatur und einer Temperatur der Wärmeleitplatte umfasst, der weitere Temperaturfühler zum Messen der Raumtemperatur derart angebunden ist, dass dessen Anbindung (Signalanbindung) gleichzeitig eine mechanische Befestigung eines weiteren Bauteils bildet. In anderen Worten wird eine Anbindung des weiteren Temperaturfühlers derart umgesetzt, dass diese Signalverbindung gleichzeitig zum mechanischen Befestigen eines weiteren Bauteils dient. Die Signalverbindung, über die die elektrischen Signale des Temperaturfühlers abgegriffen bzw. abgeführt werden, erfüllt also eine Doppelfunktion.

Durch diese Doppelfunktion werden insbesondere eine Einsparung von Kosten sowie ein robustes Design ermöglicht. Zum einen wird es ermöglicht, dass Standardkomponenten eingesetzt werden. Zum anderen kann auf eine separate Verdrahtung, die ggf. aufwendiger wäre, verzichtet werden. Es ergibt sich eine effiziente Montierbarkeit bei vergleichsweise geringen Materialkosten.

In einer bevorzugten Ausgestaltung verläuft die elektrische Verbindung zwischen dem weiteren Temperaturfühler und einer Platine im Basisteil. Vorzugsweise erstreckt sich die elektrische Verbindung von der Platine ausgehend in Richtung einer der Wärmeleitplatte abgewandten Seite des Basisteils. Zusätzlich oder alternativ ist die elektrische Verbindung zum mechanischen Befestigen des Temperaturfühlers ausgebildet. Insbesondere ist es vorteilhaft, wenn der weitere Temperaturfühler direkt mittels eines entsprechenden Mikrocontrollers auf einer Platine angesteuert bzw. ausgelesen wird. Die Anbindung an die Platine kann beispielsweise mittels Pins erfolgen. Der Temperaturfühler selbst kann dann mit diesen bzw. über diese Pins kontaktiert werden. Üblicherweise sind zur Anbindung eines Temperaturfühlers zwei Signalleitungen erforderlich. Eine effiziente Montierbarkeit wird ermöglicht. Unabhängig hiervon ist es vorteilhaft, wenn der Temperatursensor über die elektrische Verbindung auch festgelegt bzw. befestigt wird. Insbesondere können die Pins des Temperatursensors einerseits die Kontaktierung des Temperatursensor bewirken und andererseits auch die mechanische Befestigung sicherstellen. Besonders vorteilhaft ist der Temperatursensor ausschließlich über die elektrische Verbindung mechanisch befestigt.

In einer bevorzugten Ausgestaltung umfasst die elektrische Verbindung einen ersten Abschnitt einer mechanischen Befestigung des weiteren Bauteils und einen zweiten Abschnitt einer elektrischen Kontaktierung des weiteren Temperaturfühlers. Der erste Abschnitt umfasst vorzugsweise zwei Pins des weiteren Bauteils. Insbesondere ist es möglich, dass die elektrische Verbindung zwei Abschnitte aufweist. Ein erster Abschnitt ist dabei beispielsweise ein ohnehin vorgesehener Teil einer mechanischen Kontaktierung des weiteren Bauteils. Ein zweiter Abschnitt ist eine Anbindung des Temperaturfühlers selbst. In anderen Worten kann also eine elektrisch leitfähige Anbindung des weiteren Bauteils (die in erster Linie dessen mechanischer Befestigung dient) zusätzlich für die Kontaktierung des weiteren Temperaturfühlers verwendet werden. Insbesondere ist es möglich, dass der weitere Temperaturfühler direkt an die mechanische Befestigung des weiteren Bauteils angebunden wird und die Auslesung des weiteren Temperaturfühlers sozusagen durch die Befestigung des weiteren Bauteils hindurch erfolgt. Wenn das weitere Bauteil also beispielsweise mittels mehrerer Pins (Beinchen) angebunden ist und zwei Pins lediglich der mechanischen Befestigung dienen, können diese beiden Pins einerseits über die Platine mit der entsprechenden Auswerteelektronik verbunden werden und andererseits dazu dienen, den weiteren Temperaturfühler festzulegen. Der weitere Temperaturfühler wird also sozusagen an bzw. über die beiden Pins angebunden, insbesondere an die Pins angelötet.

In einer bevorzugten Ausgestaltung umfasst der zweite Abschnitt zwei Pins des Temperaturfühlers, die an den zwei Pins des weiteren Bauteils befestigt sind, vorzugsweise durch Löten oder Schweißen, und die gleichzeitig zum mechanischen Befestigen sowie zum elektrischen Kontaktieren des Temperaturfühlers ausgebildet sind. Der Temperatursensor ist ebenfalls über Pins befestigt. Die elektrische Verbindung umfasst insoweit sowohl die Pins des weiteren Bauteils als auch weitere Pins, insbesondere Pins des Temperatursensors. Die beiden Paare von Pins können dabei bspw. aneinandergeschweißt oder gelötet sein. Durch die Paare von Pins wird der Temperatursensor vorzugsweise mechanisch befestigt/festgelegt.

In einer bevorzugten Ausgestaltung ist die elektrische Verbindung gleichzeitig zum mechanischen Befestigen eines Displays zum Anzeigen von Werten für einen Benutzer ausgebildet, insbesondere eines innerhalb des Basisteils angeordneten Displays. Ein Display ist oft ein elektrisches Bauteil, das vergleichsweise groß ist und für dessen Befestigung auf einer Platine mehrere Pins vorgesehen sind. Das Display weist dabei üblicherweise mehrere Pins auf, von denen manche zum Transport von Signalen bzw. zur Ansteuerung des Displays ausgebildet sind und manche lediglich der mechanischen Befestigung dienen. Erfindungsgemäß ist es vorgesehen, dass der weitere Temperaturfühler an zwei Pins dieses Displays angebunden ist, die ansonsten lediglich eine mechanische Befestigungsfunktion für das Display erfüllen. Diese Pins des Displays werden also sozusagen parasitär für den weiteren Temperaturfühler verwendet. Eine separate Verdrahtung für den weiteren Temperaturfühler wird umgangen. Eine effiziente Befestigung des weiteren Temperaturfühlers bei geringen Kosten wird ermöglicht.

In einer bevorzugten Ausgestaltung umfasst das Basisteil einen Ausschnitt oder einen transparenten Bereich auf einer der Wärmeleitplatte abgewandten Seite für das Display. Das Display ist also entweder durch einen transparenten Bereich (eine Scheibe) des Basisteils hindurch ablesbar. Oder das Basisteil weist an der entsprechenden Stelle einen Ausschnitt auf. Durch die Ablesung des Displays kann beispielsweise eine Auskunft über einen aktuellen Sensorwert/Temperaturwert oder auch über eine darauf basierend berechnete Messgröße ermöglicht werden. Es ergibt sich eine verbesserte Bedienbarkeit.

In einer bevorzugten Ausgestaltung umfasst das Basisteil einen Fortsatz zum Eingreifen in einen Bereich zwischen Heizkörper und Wärmeleitplatte, um das Basisteil an die Wärmeleitplatte anzukoppeln. Am Erfassungsgerät ist ein Fortsatz vorgesehen, der in den Bereich zwischen Heizkörper und Wärmeleitplatte eingreift. Insbesondere soll also ein Fortsatz vorgesehen sein, der in einen Hohlraum eingreift, der beim Anlegen der Wärmeleitplatte an eine flache oder nur leicht gewölbte Oberfläche entsteht. Der Fortsatz kann insbesondere derart ausgebildet sein, dass er die Wärmeleitplatte (teilweise) hintergreift. Unter einem Eingreifen in einen Bereich zwischen Heizkörper und Wärmeleitplatte ist also insbesondere ein Erstrecken hinter die Wärmeleitplatte bzw. hinter die dem Heizkörper zugewandte Seite der Wärmeleitplatte (in montiertem Zustand am Heizkörper) zu verstehen. Der Fortsatz steht vorzugsweise in Kontakt mit dieser Rückseite der Wärmeleitplatte. Durch die Kontaktierung kann insbesondere eine Art Festklemmen und Festlegen des Basisteils bzw. des Erfassungsgeräts an der Wärmeleitplatte bzw. am Heizkörper erfolgen. Dieser Fortsatz ermöglicht eine verbesserte Interoperabilität. Insbesondere wird eine Unabhängigkeit der Befestigung von einer Profilierung an der Vorderseite der Wärmeleitplatte ermöglicht. Durch den Fortsatz wird eine Verwendung des Erfassungsgeräts mit unterschiedlichen im Gebäudebestand verwendeten Wärmeleitplatten ermöglicht. Kostenvorteile lassen sich realisieren.

In einer bevorzugten Ausgestaltung ist das Basisteil zum Ankoppeln an die Wärmeleitplatte durch Aufschieben entlang einer Längsachse des Basisteils ausgebildet. Der Fortsatz ist zum Eingreifen in den Bereich zwischen Heizkörper und Wärmeleitplatte beim Aufschieben ausgebildet. Die Längsachse des Basisteils entspricht im angekoppelten Zustand des Erfassungsgeräts am Heizkörper insbesondere einer Vertikalachse des Heizkörpers bzw. einer Oben-/Unten-Richtung. Unter einem Aufschieben ist insbesondere ein Aufgleiten in Richtung der Vertikalachse zu verstehen. Der Fortsatz wird durch das Aufschieben in den Bereich zwischen Heizkörper und Wärmeleitplatte hineingeschoben. Nach dem Aufschieben erfolgt insoweit ein Festlegen bzw. ein Befestigen. Im Vergleich zu bisherigen Ansätzen ist keine Interaktion mit der Profilierung an der Vorderseite der Wärmeleitplatte für das Festlegen erforderlich.

**In** einer bevorzugten Ausgestaltung umfasst das Erfassungsgerät einen Verbinder zum Herstellen einer wärmeleitenden Verbindung zwischen Wärmeleitplatte und Temperaturfühler. Der Verbinder ist in seiner Länge variabel und vorzugsweise als Leitgummi aus elastischem, thermisch leitfähigem Material ausgebildet. Durch den Verbinder kann insofern ein variabler Abstand zwischen der Vorderseite der Wärmeleitplatte und dem Temperaturfühler im Basisteil selbst abgebildet werden. **In** einer anderen Ausführung kann der variable Abstand durch ein federndes Element überbrückt werden, das zugleich als elektrische Verbindung zum Temperatursensor ausgeführt sein kann, wobei der Temperatursensor direkt oder via Schutz- oder Adaptionselementen auf der Wärmeleitplatte aufsitzen kann. Der Verbinder kann insoweit sozusagen ein federndes Element umfassen. Unabhängig von der Profilierung der Vorderseite der Wärmeleitplatte kann eine Ankopplung des Temperaturfühlers ermöglicht werden. Dies ermöglicht eine weiter verbesserte Interoperabilität bzw. Kompatibilität. Insbesondere ist es dabei möglich, einen gefederten Stift oder auch ein elastisches und thermisch leitfähiges Material als Verbinder vorzusehen. Insbesondere kann ein Leitgummi verwendet werden. Dies ermöglicht eine ausreichend gute Anbindung und eine aussagekräftige Temperaturmessung.

**In** einer bevorzugten Ausgestaltung ist das Basisteil auf einer dem Fortsatz abgewandten Seite zum Ankoppeln an eine Abdeckung ausgebildet. Die Abdeckung ist vorzugsweise dazu ausgebildet, zusammen mit dem Basisteil an der Heizplatte ein Gehäuse auszubilden. Insbesondere ist es möglich, dass die Abdeckung als Plombe ausgebildet ist und ein Verplombungsmechanismus zwischen Abdeckung und Basisteil ein zerstörungsfreies Öffnen verhindert. Dies ermöglicht eine Aufdeckung eines Eingriffs. Die Abdeckung bildet zusammen mit dem Basisteil an der Heizplatte ein Gehäuse und sorgt insoweit dafür, dass ein Zugriff auf dem Temperaturfühler von außen nicht möglich ist. Eine Eingriffsverhinderung wird erreicht. Insbesondere können auch verschieden ausgebildete Abdeckungen vorgesehen sein, um unterschiedliche Arten von Wärmeleitplatten und unterschiedliche Profile von Wärmeleitplatten anbindbar zu machen. Die Abdeckung kann insbesondere dazu ausgebildet sein, an einem Profil auf der Wärmeleitplatte, insbesondere auf der Vorderseite der Wärmeleitplatte, befestigt zu werden. Insbesondere kann die Abdeckung ebenfalls aufschiebbar aus einer der Aufschieberichtung des Erfassungsgeräts gegenüberliegenden Richtung ausgebildet sein. Es ergibt sich eine einfache Bedienbarkeit.

In einer bevorzugten Ausgestaltung umfasst das Erfassungsgerät eine Platine, auf der der Temperaturfühler sowie das Display angeordnet sind und über die eine Verbindung des weiteren Temperaturfühlers mit einer Auswerteelektronik implementiert sind. Die Platine kann insbesondere innerhalb des Basisteils festgelegt sein und entsprechend befestigt sein. Zudem kann die Platine auch als Befestigung für den Verbinder sowie auch für weitere Komponenten dienen.

In einer bevorzugten Ausgestaltung umfasst das Erfassungssystem eine Abdeckung. Diese Abdeckung kann insbesondere auch als Verplombung bzw. als Plombe ausgebildet sein. Durch ein Aufschieben oder ein Anbringen der Abdeckung in anderer Weise kann bei einer Ausbildung als Plombe sichergestellt werden, dass von außen durch einen Nutzer oder einen Bediener kein Einfluss genommen werden kann. Es ergibt sich damit ggf. auch eine Einhaltung gesetzlicher Vorschriften.

Unter einem Temperaturwert versteht sich hier insbesondere ein Wert, der einer Temperatur entspricht. Beispielsweise kann ein Widerstand oder auch eine andere elektrische Messgröße gemessen werden. Ein Temperaturfühler kann insoweit insbesondere ein PTC- oder NTC-Element sein bzw. ein solches umfassen. Das Basisteil kann insbesondere zum lösbaren Ankoppeln an die Wärmeleitplatte ausgebildet sein. Unter einem lösbaren Ankoppeln wird insbesondere eine zerstörungsfreie Lösbarkeit verstanden, solange das Basisteil nicht mit einer Abdeckung/Plombe zusammengefügt ist. Unter einer elektrischen Verbindung versteht sich hierin insbesondere eine elektrisch leitende Verbindung, über die Signale geleitet werden können. Insbesondere handelt es sich um eine drahtgebundene Verbindung mit zwei Leitungen bzw. Drähten. Insbesondere wird durch die elektrische Verbindung sowohl eine Kontaktierung im Sinne eines Auslesens des Temperatursensors als auch eine mechanische Befestigung (ein mechanisches Festlegen) bewirkt. Vorzugsweise ist der Temperatursensor ausschließlich über die elektrische Verbindung befestigt. Ein Pin entspricht insbesondere einem Anschlussstift bzw. einem sogenannten Beinchen oder Anschlussbeinchen eines elektronischen Bauteils. Ein Pin kann insbesondere Kupfer oder eine Kupferlegierung umfassen. Um Korrosion zu verhindern und die Lötbarkeit zu verbessern, kann ein Pin mit Zinn, Gold oder Nickel beschichtet sein. Unter einem Messen einer Temperatur der Wärmeleitplatte wird auch ein Messen einer mit dieser Temperatur der Wärmeleitplatte verbundenen Temperatur verstanden. Unter einem Messen einer Raumtemperatur wird auch ein Messen einer mit dieser Raumtemperatur verbundenen Temperatur verstanden.

Die Erfindung wird nachfolgend anhand einiger ausgewählter Ausführungsbeispiele im Zusammenhang mit den beiliegenden Zeichnungen näher beschrieben und erläutert. Es zeigen:
- Figur 1: eine schematische Darstellung eines erfindungsgemäßen Erfassungssystems an einem Heizkörper;
- Figur 2: eine schematische Darstellung eines erfindungsgemäßen Erfassungssystems;
- Figur 3: eine schematische Konstruktionsansicht einer Ausführungsform eines erfindungsgemäßen Erfassungssystems;
- Figur 4: eine schematische Schnittansicht einer Ankopplung eines Basisteils an vier verschieden profilierte Wärmeleitplatten;
- Figur 5: eine perspektivische Darstellung eines Basisteils einer Ausführungsform eines erfindungsgemäßen Erfassungsgeräts; und
- Figur 6: eine schematische Darstellung einer Schnittansicht des Fortsatzes an dem Basisteil.

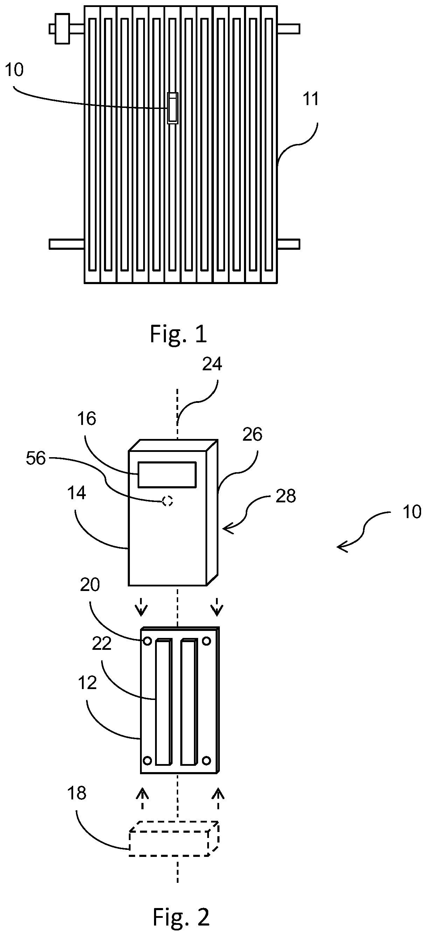

In Figur 1 ist schematisch ein erfindungsgemäßes Erfassungssystem 10 an einem Heizkörper 11 dargestellt. Derartige Erfassungssysteme werden eingesetzt, um Temperaturen bzw. Temperaturdifferenzen an Heizkörpern zu erfassen. Basierend auf den erfassten Temperaturwerten oder Temperaturdifferenzen kann auf einen Heizleistungsverbrauch rückgeschlossen werden. Vergleichbare Erfassungssysteme umfassen dabei eine Wärmeleitplatte, die fest mit dem Heizkörper verbunden und üblicherweise aus Metall ausgebildet ist, sowie ein Erfassungsgerät, das an diese Wärmeleitplatte anbindet.

Erfindungsgemäß ist eine effiziente Erfassung von Temperaturwerten der Wärmeleitplatte bzw. der Heizung sowie des Raums, in dem sich die Heizung befindet, vorgesehen. Ein effizient fertigbares Erfassungssystem mit zuverlässiger Erfassung von Temperaturen soll bereitgestellt werden.

In Figur 2 ist in diesem Zusammenhang ein erfindungsgemäßes Erfassungssystem 10 dargestellt, das neben einem Erfassungsgerät 14 eine Wärmeleitplatte 12 umfasst. Die Wärmeleitplatte 12 ist im dargestellten Ausführungsbeispiel mit insgesamt vier Schraubverbindungen 20 am Heizkörper (nicht dargestellt) angebracht. Auf der in Figur 2 dargestellten Vorderseite weist die Wärmeleitplatte 12 eine Profilierung 22 auf. Das Erfassungsgerät 14 ist entlang einer Längsachse 24 ausgebildet. Das Erfassungsgerät 14 kann entlang der Längsachse 24 auf die Wärmeleitplatte 12 aufgeschoben werden.

Das Erfassungsgerät 14 umfasst ein Basisteil 26, das zum lösbaren Ankoppeln an die Wärmeleitplatte 12 ausgebildet ist. Das Basisteil 26 kann beispielsweise ein Spritzgussteil sein. Zudem umfasst das Erfassungsgerät 14 einen Temperaturfühler 28, der im Inneren des Basisteils 26 angeordnet ist. Über den Temperaturfühler 28 wird eine Temperatur des Heizkörpers gemessen. Hierzu ist der Temperaturfühler 28 in thermischem Kontakt mit der Wärmeleitplatte 12, die üblicherweise aus wärmeleitendem Material, zumeist Metall, ausgebildet ist. Zudem umfasst das Erfassungsgerät 14 einen weiteren Temperaturfühler 56, der zum Erfassen einer Raumtemperatur ausgebildet ist. **In** der Darstellung ist angedeutet, dass dieser weitere Temperaturfühler 56 vorzugsweise auf einer der Wärmeleitplatte 12 abgewandten Seite des Erfassungsgeräts 14 angeordnet sein kann, um die Raumtemperatur an einer möglichst weit von der Heizung entfernten Stelle zu erfassen und damit eine zuverlässige Aussage bzgl. der Raumtemperatur zu ermöglichen. Der weitere Temperaturfühler 56 kann beispielsweise innerhalb des Gehäuses unter einer entsprechenden Perforation angeordnet sein.

Im dargestellten Ausführungsbeispiel ist zudem eine (optionale) Abdeckung 18 dargestellt und Teil des Erfassungssystems 10. Diese kann entlang der Längsachse 24 von unten auf die Wärmeleitplatte 12 aufgeschoben werden und bildet insoweit ein Gegenstück zum Erfassungsgerät 14 bzw. zum Basisteil 26 des Erfassungsgeräts 14. Insbesondere kann vorgesehen sein, dass die Abdeckung 18 als Plombe ausgebildet ist bzw. eine Funktion einer Plombe bereitstellt und einen Zugang zu einem innerhalb des Erfassungsgeräts angeordneten Temperaturfühler verhindert. Beispielsweise kann die Abdeckung 18 derart ausgebildet sein, dass ein zerstörungsfreies Abziehen und Öffnen nicht möglich ist. Insoweit kann eine Einflussnahme eines Nutzers auf die Erfassung der Temperaturwerte verhindert oder zumindest nachvollziehbar gemacht werden.

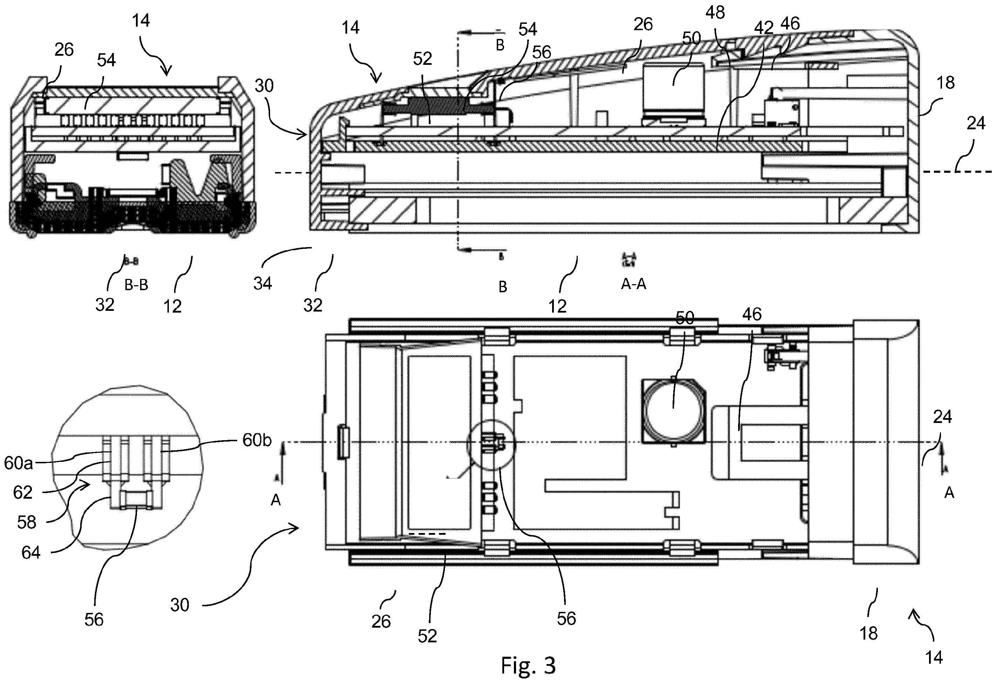

In Figur 3 ist eine Konstruktionszeichnung einer Ausführungsform eines erfindungsgemäßen Erfassungsgeräts 14 dargestellt. Die vier verschiedenen Ansichten sind über die gezeigten Schnittebenen bzw. Schnittachsen miteinander in Bezug zu setzen. Die Ansicht unten links entspricht einer vergrößerten Darstellung des in der Darstellung unten rechts eingekreisten Bereichs. Nicht alle Bezugszeichen sind in allen drei Ansichten eingezeichnet, um die Übersichtlichkeit zu erhalten.

Das Erfassungsgerät 14 umfasst einen weiteren Temperaturfühler 56 innerhalb des Basisteils 26 vorgesehen. Dieser weitere Temperaturfühler 56 ermöglicht ein Aufnehmen einer Raumtemperatur auf einer der Wärmeleitplatte 12 abgewandten Seite des Erfassungsgeräts 14. Insbesondere kann durch den weiteren Temperaturfühler 56 damit eine Messung einer Temperaturdifferenz zwischen der Wärmeleitplatte 12 (deren Temperatur mittels des Temperaturfühlers erfasst wird) und der Umgebung (deren Temperatur mittels des weiteren Temperaturfühlers 56 erfasst wird) ermöglicht werden. Diese Temperaturdifferenz kann dann zur Ermittlung der verbrauchten Wärmemenge herangezogen werden.

Im dargestellten Ausführungsbeispiel ist innerhalb des Basisteils 26 auf einer Platine 42 eine Batterie 50 zum Versorgen der verschiedenen elektronischen Komponenten mit Energie angeordnet. Zudem ist im dargestellten Ausführungsbeispiel ein Display 52 auf der Platine 42 angeordnet, um einem Nutzer Informationen anzeigen zu können. Das Display 52 ist im dargestellten Ausführungsbeispiel hinter einem transparenten Bereich 54 des Basisteils angeordnet und durch diesen transparenten Bereich 54 hindurch ablesbar.

Erfindungsgemäß ist vorgesehen, dass der weitere Temperaturfühler 56 über eine elektrische Verbindung 58 ausgelesen wird, die gleichzeitig zum mechanischen Befestigen eines weiteren Bauteils dient. Insbesondere ist im dargestellten Ausführungsbeispiel vorgesehen, dass die Kontaktierung des weiteren Temperaturfühlers 56 über Pins des Displays 52 erfolgt. Das Display 52 wird über mehrere Pins (auch als Beinchen bzw. Drahtstifte bezeichnet) an die Platine 42 angebunden. Nur ein Teil dieser Pins sind als Steuerleitungen ausgebildet, um Signale von einer Auswerteelektronik an das Display 52 zu übergeben. Der weitere Temperaturfühler 56 verwendet zwei Pins 60a, 60b, die nicht für eine Signalisierung zwischen Display 52 und Auswerteelektronik benötigt werden, bzw. ist an diese zwei Pins 60a, 60b angebunden.

Unabhängig davon, ob es sich bei dem weiteren Bauteil um ein Display 52 oder ein anderes Bauteil handelt, kann die elektrische Verbindung 58 des weiteren Temperaturfühlers 56 also einen ersten Abschnitt 62 und einen zweiten Abschnitt 64 umfassen. Der erste Abschnitt 62 dient vorrangig der mechanischen Befestigung des weiteren Bauteils. Der zweite Abschnitt 64 dient vorrangig der elektrischen Kontaktierung bzw. dem Auslesen des weiteren Temperaturfühlers 56 sowie dessen mechanischer Befestigung. In anderen Worten kann also der weitere Temperaturfühler 56 direkt (oder auch unter Zwischenschaltung eines bzw. mehrerer weiterer Zusatzteile) an die Pins 60a, 60b des Displays 52 bzw. eines anderen Bauteils angebunden sein, insbesondere angelötet.

Das Erfassungsgerät 14 umfasst im dargestellten Ausführungsbeispiel ein Basisteil 26 mit Fortsatz 32, der die Wärmeleitplatte 12 hintergreift und dazu ausgebildet ist, in einen Bereich zwischen Heizkörper und Wärmeleitplatte 12 einzugreifen. Der Fortsatz 32 ist im dargestellten Ausführungsbeispiel an einer Stirnseite 30 des Basisteils 26 angeordnet. Eine Verbindungsstelle 34 des Fortsatzes 32 mit dem Basisteil 26 liegt im Bereich der Stirnseite 30. Ausgehend von dieser Verbindungsstelle 34 erstreckt sich der Fortsatz 32 entlang bzw. parallel zu einer Längsachse 24 des Basisteils 26 von der Verbindungsstelle 34 weg. Wie dargestellt, entspricht die Verbindungsstelle 34 bzw. der Fortsatz 32 einem Bereich des Basisteils 26, an dem dieses einen minimalen Abstand vom Heizkörper aufweist (in montiertem Zustand). Auch in diesem Ausführungsbeispiel ist es vorteilhaft, wenn die Verbindungsstelle 34 in einer mittigen Position quer zur Längsachse 24 des Basisteils 26 angeordnet ist.

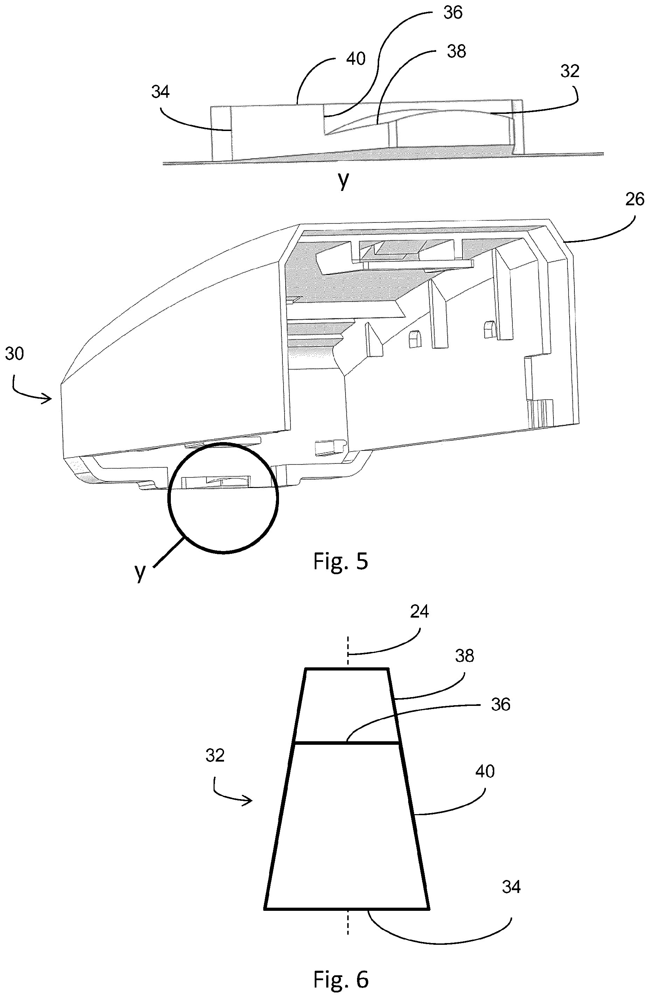

Zur Montage bzw. zum Ankoppeln des Erfassungsgeräts 14 an der Wärmeleitplatte 12 ist es vorgesehen, dass ein Aufschieben des Basisteils 26 entlang der Längsachse 24 erfolgt. In der oben rechts angeordneten Seitenansicht in Figur 6 erfolgt das Aufschieben von links nach rechts. Beim Aufschieben wird der Fortsatz 32 hinter die Wärmeleitplatte 12 geschoben und legt das Basisteil 26 damit an der Wärmeleitplatte 12 fest. Im dargestellten Ausführungsbeispiel ist gezeigt, dass in einer vorteilhaften Ausgestaltung nach dem Aufschieben eine Abdeckung 18 von der anderen Seite (in der Darstellung in Figur 6 oben rechts von der rechten Seite ausgehend) auf das Basisteil 26 angekoppelt werden kann. Basisteil 26, Abdeckung 18 und Wärmeleitplatte 12 bilden dann ein Gehäuse, das den Temperaturfühler (in der Darstellung nicht erkennbar) sowie die weiteren Komponenten im Inneren des Basisteils 26 vor externen Einflüssen schützt.

Vorteilhafterweise ist es weiterhin vorgesehen, dass die Abdeckung 18 derart an das Basisteil 26 ankoppelt, dass ein zerstörungsfreies Öffnen nicht möglich ist. Hierdurch wird eine Manipulationssicherheit erreicht. Ein Öffnen ohne sichtbare Spuren ist nicht möglich. Insoweit wird es einem Nutzer erschwert oder unmöglich gemacht, auf die Messung Einfluss zu nehmen und damit unter Umständen eine Manipulation der Heizkostenabrechnung zu erreichen. Die Abdeckung 18 kann aus diesem Grund auch als Plombe bezeichnet werden. Für diese Manipulationssicherheit und dieses Verhindern eines zerstörungsfreien Öffnens ist im dargestellten Ausführungsbeispiel in Figur 6 eine Lasche 46 vorgesehen. Diese Lasche 46 greift mit daran angeordneten Haken in Gegenhaken am Basisteil 26 ein. Beim Aufschieben der Abdeckung 18 wird insoweit durch Verformung und Entspannung eine Hakverbindung im Inneren des Basisteils 26 hergestellt. Diese kann nicht geöffnet werden, ohne eine Zerstörung zu bewirken. Dabei kann es vorgesehen sein, dass eine verplombte Öffnung 48 am Basisteil 26 einen Zugang für einen spitzen Gegenstand bildet, um ein Abziehen der Abdeckung 18 zu ermöglichen, wobei allerdings die Plombe zerstört werden muss. Es versteht sich, dass für die Herstellung einer Manipulationssicherheit auch eine andere Konstruktion verwendbar ist.

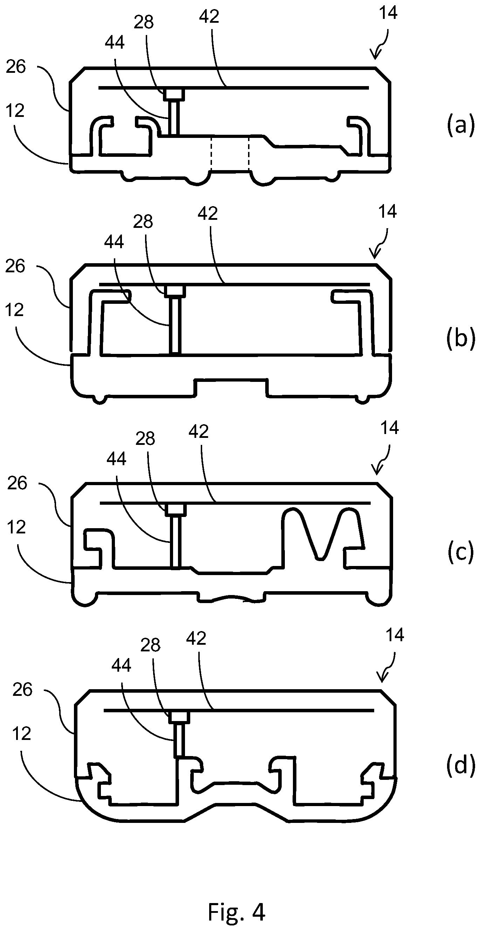

In Figur 4 sind vier verschiedene Ausführungsformen von erfindungsgemäßen Erfassungsgeräten 14 dargestellt. Die Darstellungen sind dabei jeweils als Schnittansichten quer zu einer Längsachse des Basisteils 26 zu verstehen. Das Basisteil 26 ist jeweils identisch ausgebildet. Die Wärmeleitplatten 12 in den vier Darstellungen weisen jeweils unterschiedliche Profilierungen an ihren Ober- und Unterseiten auf. In der Darstellung ist der Fortsatz am Basisteil 26 nicht erkennbar.

Innerhalb des Basisteils 26 ist eine Platine 42 angeordnet ist, auf der sich der Temperaturfühler 28 befindet. Dargestellt ist, dass aufgrund einer unterschiedlichen Profilierung auf der Oberseite der Wärmeleitplatte 12 der Abstand zwischen Temperaturfühler 28 und Wärmeleitplatte 12 unterschiedlich sein kann. Um dies zu kompensieren und trotzdem eine thermisch leitfähige Verbindung zwischen Temperaturfühler 28 und Wärmeleitplatte 12 bereitstellen zu können, kann erfindungsgemäß ein Verbinder 44 zum Herstellen einer wärmeleitenden Verbindung zwischen Wärmeleitplatte 12 und Temperaturfühler 28 vorgesehen sein.

Als Verbinder 44 kann insbesondere ein in seiner Länge variables Bauteil verwendet werden. Vorteilhafterweise kann ein Leitgummi aus elastischem, thermisch leitfähigem Material verwendet werden. Durch die Verwendung eines Leitgummis kann erreicht werden, dass unterschiedliche Abstände zwischen Temperaturfühler 28 und Wärmeleitplatte 12 möglich sind. Alternativ oder auch in Kombination mit einem Leitgummi ist es auch möglich, dass der Verbinder 44 als Federelement ausgestaltet ist bzw. ein Federelement umfasst. Beispielsweise kann ein Metallstift federnd gelagert sein, um die Abstandsvariabilität bereitzustellen.

In Figur 5 ist eine perspektivische Darstellung einer Ausführungsform des Basisteils 26 gezeigt. Das Basisteil 26 ist im dargestellten Ausführungsbeispiel als Spritzgussteil ausgebildet. Der eingekreiste Bereich im unteren Bereich von Figur 5 ist im oberen Bereich in Figur 5 zur besseren Ansicht vergrößert dargestellt. Das Basisteil 26 umfasst im Bereich einer Stirnseite 30 einen Fortsatz 32, der zum Eingreifen in einen Bereich zwischen Heizkörper und Wärmeleitplatte ausgebildet ist. Durch den Eingriff wird die Ankopplung des Basisteils 26 an die Wärmeleitplatte ermöglicht. Insbesondere erfolgt insoweit ein Festlegen des Basisteils 26 an der Wärmeleitplatte.

Im dargestellten Ausführungsbeispiel ist der Fortsatz 32 integral mit dem Basisteil 26 ausgeführt. Der Fortsatz 32 ist im Wesentlichen flächig ausgebildet und erstreckt sich ausgehend von einer Verbindungsstelle 34 mit dem Basisteil 26 in Richtung einer Längsachse des Basisteils 26 in einer parallel zur Wärmeleitplatte verlaufenden Ebene. Die Verbindungsstelle 34 ist im Bereich der Stirnseite 30 des Basisteils angeordnet. Die Verbindungsstelle 34 kann insbesondere in einer mittigen Position quer zu dieser Längsachse des Basisteils angeordnet sein. Insbesondere kann die Verbindungsstelle 34 einer Stelle des Basisteils 26 mit minimalem Abstand von dem Heizkörper entsprechen. Es versteht sich, dass dies abhängig von der Form des Heizkörpers (Lamellen- oder Rippenheizkörper) auch bedeuten kann, dass die Verbindungsstelle 34 und der Fortsatz 32 einem Bereich des Basisteils 26 entsprechen, der einer maximalen Ausdehnung des Basisteils 26 in Richtung seiner dem Heizkörper zugewandten Seite entspricht. Der Fortsatz 32 kann in anderen Worten also demjenigen Bereich des Basisteils 26 entsprechen, der einer maximalen Ausdehnung des Basisteils 26 auf seiner dem Heizkörper zugewandten Seite entspricht.

In Figur 6 ist eine vorteilhafte Ausführungsform des Fortsatzes 32 schematisch in einer Schnittansicht dargestellt. Insbesondere entspricht die Darstellung in Figur 4 dabei einer Draufsicht auf den Fortsatz 32 in der Ausführungsform in Figur 3. Dargestellt ist, dass sich der Fortsatz 32 entlang der Längsachse 24 des Basisteils bzw. des Fortsatzes 32 erstreckt. Der Fortsatz 32 weist eine sich stetig verjüngende Querschnittsfläche senkrecht zur Längsachse 24 auf.

In der Darstellung der Figur 6 ist erkennbar, dass die Verjüngung schon durch eine im Wesentlichen trapezförmige Form erreicht werden kann. Dabei kann also die Ausdehnung in die Zeichnungsebene in Figur 4 hinein auch konstant sein. Bei der in den Figuren 3 und 4 dargestellten Ausführungsform umfasst der Fortsatz 32 aber zwischen zwei Abschnitten 38, 40 mit stetiger Querschnittsänderung eine Stufe 36 oder Abstufung mit einer sprunghaften Querschnittsveränderung, die ggf. als Anschlag dienen kann.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Bezugszeichen in den Patentansprüchen sind nicht einschränkend zu verstehen.

## Patentansprüche

1. Erfassungsgerät (14) zum Erfassen von Temperaturwerten an einer Wärmeleitplatte (12) an einem Heizkörper (11), mit:
einem Basisteil (26) zum Ankoppeln an die Wärmeleitplatte;
einem Temperaturfühler (28) zum Messen einer Temperatur der Wärmeleitplatte; und
einem weiteren Temperaturfühler (56) zum Messen einer Raumtemperatur, wobei eine elektrische Verbindung (58) zum Auslesen des weiteren Temperaturfühlers gleichzeitig zum mechanischen Befestigen eines weiteren Bauteils ausgebildet ist.

2. Erfassungsgerät (14) nach Anspruch 1, wobei die elektrische Verbindung (58)
zwischen dem weiteren Temperaturfühler (56) und einer Platine (42) im Basisteil (26) verläuft und sich vorzugsweise von der Platine ausgehend in Richtung einer der Wärmeleitplatte (12) abgewandten Seite des Basisteils erstreckt; und/oder
zum mechanischen Befestigen des Temperaturfühlers ausgebildet ist.

3. Erfassungsgerät (14) nach einem der vorstehenden Ansprüche, wobei die elektrische Verbindung (58) einen ersten Abschnitt (62) einer mechanischen Befestigung des weiteren Bauteils und einen zweiten Abschnitt (64) einer elektrischen Kontaktierung des weiteren Temperaturfühlers (56) umfasst; und
der erste Abschnitt vorzugsweise zwei Pins (60a, 60b) des weiteren Bauteils umfasst.

4. Erfassungsgerät nach Anspruch 3, wobei der zweite Abschnitt zwei Pins des Temperaturfühlers umfasst, die an den zwei Pins des weiteren Bauteils befestigt sind, vorzugsweise durch Löten oder Schweißen, und die gleichzeitig zum mechanischen Befestigen sowie zum elektrischen Kontaktieren des Temperaturfühlers ausgebildet sind.

5. Erfassungsgerät (14) nach einem der vorstehenden Ansprüche, wobei die elektrische Verbindung (58) gleichzeitig zum mechanischen Befestigen eines Displays (52) zum Anzeigen von Werten für einen Benutzer ausgebildet ist, insbesondere eines innerhalb des Basisteils (26) angeordneten Displays.

6. Erfassungsgerät (14) nach Anspruch 4, wobei
das Basisteil (26) einen Ausschnitt oder einen transparenten Bereich (54) auf einer der Wärmeleitplatte (12) abgewandten Seite für das Display (52) umfasst.

7. Erfassungsgerät (14) nach einem der vorstehenden Ansprüche, wobei der weitere Temperaturfühler (56) vorzugsweise innerhalb des Basisteils (26) auf einer der Wärmeleitplatte (12) abgewandten Seite angeordnet ist.

8. Erfassungsgerät (14) nach einem der vorstehenden Ansprüche, wobei das Basisteil (26) einen Fortsatz (32) zum Eingreifen in einen Bereich zwischen Heizkörper (11) und Wärmeleitplatte (12) umfasst, um das Basisteil an die Wärmeleitplatte anzukoppeln.

9. Erfassungsgerät (14) nach Anspruch 7, wobei
das Basisteil (26) zum Ankoppeln an die Wärmeleitplatte (12) durch Aufschieben entlang einer Längsachse (24) des Basisteils ausgebildet ist;
der Fortsatz (32) zum Eingreifen in den Bereich zwischen Heizkörper (11) und Wärmeleitplatte beim Aufschieben ausgebildet ist; und
die Längsachse des Basisteils vorzugsweise im angekoppelten Zustand einer Vertikalachse des Heizkörpers entspricht.

10. Erfassungsgerät (14) nach einem der vorstehenden Ansprüche mit einem Verbinder (44) zum Herstellen einer wärmeleitenden Verbindung zwischen Wärmeleitplatte (12) und Temperaturfühler (28), wobei
der Verbinder in seiner Länge variabel ist und vorzugsweise als Leitgummi aus elastischem, thermisch leitfähigem Material ausgebildet ist.

11. Erfassungsgerät (14) nach einem der vorstehenden Ansprüche, wobei
das Basisteil (26) auf einer dem Fortsatz (32) abgewandten Seite zum Ankoppeln an eine Abdeckung (18) ausgebildet ist; und
die Abdeckung vorzugsweise dazu ausgebildet ist, zusammen mit dem Basisteil und der Heizplatte ein Gehäuse auszubilden.

12. Erfassungsgerät (14) nach einem der vorstehenden Ansprüche, mit einer Platine (42), auf der der Temperaturfühler (28) sowie das Display (52) angeordnet sind und über die eine Verbindung des weiteren Temperaturfühlers (56) mit einer Auswerteelektronik implementiert ist.

13. Erfassungssystem (10) zum Erfassen von Temperaturwerten an einem Heizkörper (11), mit:
einem Erfassungsgerät (14) nach einem der vorstehenden Ansprüche; und
einer Wärmeleitplatte (12) zum Anbringen an einen Heizkörper, wobei vorzugsweise eine dem Heizkörper zugewandte Seite der Wärmeleitplatte mindestens eine Vertiefung aufweist, die beim Anlegen an eine flächige Auflage einen Hohlraum zum Aufnehmen eines Fortsatzes (32) am Basisteil (26) ausbildet.

14. Erfassungssystem (10) nach Anspruch 12 mit einem Erfassungsgerät (14) nach Anspruch 10 und einer Abdeckung (18).
